# EUROPÄISCHE PATENTANMELDUNG

(11) **EP 4 582 718 A1**
(43) Veröffentlichungstag der Anmeldung: **09.07.2025**
(21) Anmeldenummer: 24020010.5
(22) Anmeldetag: 08.01.2024
(51) Int. Cl.: F16H 25/20, G05G 5/04, H02K 7/06, H01H 3/16

(54) **LINEARBEWEGUNGSVORRICHTUNG**

(71) Anmelder: Phoenix Mecano Solutions AG, 8260 Stein am Rhein (CH)
(72) Erfinder: KUTSCHER, Christian, 78239 Rielasing (CH); FLUCK, Timo, 78187 Gisingen (CH)
(74) Vertreter: Jendricke, Susann

(57) **Zusammenfassung**

Es wird eine Linearbewegungsvorrichtung, mit einem Elektromotor, mit einer vom Elektromotor abgehenden Motorwelle, mit einer drehbar gelagerten und von der Motorwelle angetriebenen Spindel, mit einer auf der Spindel aufgesetzten, drehfest und axial verfahrbar gelagerten Spindelmutter und mit einer Endschaltereinrichtung (1), die bei Auslösung ein Aus-/Einschalten der Energieversorgung des Elektromotors bewirkt, angegeben, die einem Anwender eine Adjustierung / Feineinstellung der Endposition der Spindel und damit die Einstellung der Weglänge eines mit der Linearbewegungsvorrichtung verbindbaren Bauteils / Behälters dadurch ermöglicht, dass die Endschaltereinrichtung (1) ein Getriebe mit mindestens einem Adjustierelement (8, 9) und mit mindestens einer Auslöseeinrichtung (3, 4), umfassend Auslöser (3a, 4a), sowie mindestens einen Endschalter (5, 6) umfasst, dass durch die Auslöser (3a, 4a) der Endschalter (5, 6) ein- oder ausschaltbar ist und dass das Adjustierelement (8, 9) von außen derart in Bezug auf die Auslöseeinrichtung (3, 4) einstellbar ist, dass der Auslöser (3a, 3b) die Weglänge der Spindelmutter vorbestimmt.

## Beschreibung

Die vorliegende Erfindung betrifft eine Linearbewegungsvorrichtung, mit einem Elektromotor, mit einer vom Elektromotor abgehenden Motorwelle, mit einer drehbar gelagerten und von der Motorwelle angetriebenen Spindel, mit einer auf der Spindel aufgesetzten, drehfest und axial verfahrbar gelagerten Spindelmutter und mit einer Endschaltereinrichtung, die bei Auslösung ein Aus-/Einschalten der Energieversorgung des Elektromotors bewirkt.

In vielen Gebieten des industriellen Anlagen- und Maschinenbaus besteht ein Bedürfnis Bauteile zu bewegen, wie z.B. Klappen zu öffnen und zu schließen oder Geräte oder Behälter in Kippstellung zu verbringen und in eine Nullposition zurückzuverfahren. Hierzu werden gewöhnlich Linearbewegungsvorrichtungen eingesetzt, die eine Drehbewegung eines Motors in eine lineare Bewegung umwandeln.

Linearbewegungsvorrichtungen gemäß denen ein Elektromotor eine Spindel mit einer in Axialrichtung beweglichen Spindelmutter antreibt, sind aus dem Stand der Technik hinreichend bekannt. Lediglich beispielhaft wird auf die EP 0 355 891 A2 verwiesen.

An der Spindelmutter kann noch ein Betätigungs-/Aktivierungselement, wie z.B. eine Kolbenstange, befestigt sein. Das Betätigungs-/Aktivierungselement, wie beispielhaft die Kolbenstange, kann wiederum mit einem zu bewegenden Bauteil verbunden sein. Das bewegbare Bauteil könnte eine Klappe sein, wie sie bspw. an landwirtschaftlichen Fahrzeugen im Ladebereich zu finden sind. Das Bauteil könnte bspw. auch in Form von Geräten oder Behältern der Lebensmittelindustrie oder der chemischen Industrie / Bauindustrie vorliegen, bei denen eine Kippbewegung realisiert werden soll.

Eine Linearbewegungsvorrichtung mit einer Endschaltereinrichtung ist aus der Druckschrift DE 34 28 996 A1 bekannt. Die Endschaltereinrichtung bewirkt ein Abstellen bzw. Ausschalten der Energieversorgung, wenn ein mit der Spindelmutter verbundener Ausleger auf ein Hindernis trifft.

Der Erfindung liegt die Aufgabe zugrunde, eine Linearbewegungsvorrichtung der in Rede stehenden Art anzugeben, die einem Anwender eine Adjustierung / Feineinstellung der Endposition der Spindel und damit die Einstellung der Weglänge eines mit der Linearbewegungsvorrichtung verbindbaren Bauteils / Behälters ermöglicht.

Die voranstehende Aufgabe wird durch die Merkmale des Patentanspruches 1 gelöst. Danach ist eine Linearbewegungsvorrichtung der in Rede stehenden Art derart ausgebildet und weitergebildet, dass die Endschaltereinrichtung ein Getriebe mit mindestens einem Adjustierelement, mit mindestens einer Auslöseeinrichtung, umfassend Auslöser, sowie mindestens einen Endschalter umfasst, dass durch den Auslöser der Endschalter ein- oder ausschaltbar ist und dass das Adjustierelement von außen derart in Bezug auf die Auslöseeinrichtung einstellbar ist, dass der Auslöser die Weglänge der Spindelmutter vorbestimmt.

Zunächst ist erkannt worden, dass bei den aus dem Stand der Technik bekannten Linearbewegungsvorrichtungen eine Einstellung der Endposition des mittels der Linearbewegungsvorrichtung zu bewegenden Bauteils, wie z.B. einer Klappe, eines Behälters etc., nicht vorgesehen ist. Weiter ist erkannt worden, dass es in der Praxis häufig vorkommt, dass ein Anwender den genauen Abstand/Linearweg für seine Anwendung spezifisch einstellen muss, da sonst beispielsweise die Schließung einer Klappe nicht vollständig gelingt oder ein Behälter nicht im passenden Neigungswinkel gekippt und somit unvollständig geleert wird.

Erfindungsgemäß ist erkannt worden, dass Linearbewegungsvorrichtungen verbessert werden können, wenn ein Anwender eigenständig und ohne großen Aufwand eine Adjustierung / Feineinstellung der Endposition der Spindelmutter und damit eines daran festgelegten Betätigungs- und Aktivierungselementes für ein daran ggf. befestigten Bauteils / Behälters vornehmen kann. Erfindungsgemäß ist weiter erkannt worden, dass für einen Anwender eine einfach durchzuführende Adjustierung / Feineinstellung der Endposition dadurch ermöglicht ist, dass die Endschaltereinrichtung ein Getriebe mit einem Adjustierelement, mit mindestens einer Auslöseeinrichtung und mit mindestens einem Auslöser sowie mindestens einen Endschalter umfasst, dass durch den Auslöser der Endschalter ein- oder ausschaltbar ist und dass das Adjustierelement von außen derart in Bezug auf die Auslöseeinrichtung einstellbar ist, dass der Auslöser die Weglänge der Spindelmutter vorbestimmt.

Durch die erfindungsgemäßen Merkmale ist nunmehr sichergestellt, dass eine gezielte Einstellung der Auslöseeinrichtung und damit des den Endschalter betätigenden Auslösers auf eine einfache Art und Weise ermöglicht ist. Nach dem Einstellen des Adjustierelementes des Getriebes, wirkt dieses mit der Auslöseeinrichtung des Getriebes zusammen und der Auslöser der Auslöseeinrichtung betätigt zum wunschgemäßen Zeitpunkt den Endschalter - nämlich zur Realisierung der Linearbewegung entsprechend der vorbestimmten Weglänge und des Stopps bei erreichen der vorbestimmten Weglänge.

Die Betätigung und Einstellung des Adjustierelementes der erfindungsgemäßen Linearbewegungsvorrichtung könnte dadurch realisiert werden, dass das Adjustierelement einen koaxial zu seiner Drehachse angeordneten, gut von außen zugänglichen Antrieb aufweist. Auf diese Weise kann ein Anwender von außen ein zum Antrieb korrespondierendes Werkzeug in den Antrieb einführen. Über die Betätigung des Werkzeuges im Antrieb des Adjustierelementes kann dieses gedreht werden und damit eine Feineinstellung der Auslöseeinrichtung bewirken. In konstruktiver Hinsicht ist eine Vielzahl von Möglichkeiten gegeben, den Antrieb auszubilden. Gemäß einer bevorzugten Ausführungsform könnte der Antrieb in Form eines Innensechskant ausgebildet sein. Neben einer guten Drehmomentübertragung ist eine einfache Handhabung ohne Spezialwerkzeug ermöglicht, da entsprechende Sechskantschlüssel (Inbus) weit verbreitet sind.

Zur Übertragung der über das Werkzeug eingestellten Position des Adjustierelementes auf die Auslöseeinrichtung und den Auslöser könnte es gemäß einer bevorzugten Ausführung vorgesehen sein, dass das Adjustierelement eine Außenverzahnung und die Auslöseeinrichtung eine Innenverzahnung aufweist, wobei Außen- und Innenverzahnung miteinander kämmen. Alternativ zu einer Verzahnungslösung könnte auch mit stärker zueinander beabstandeten Ausnehmungen und Eingriffsmitteln gearbeitet werden. Letztlich gilt aber: Je höher die Anzahl der Ausnehmungen und Eingriffsmittel, um so feiner kann die Weglänge der Spindelmutter und eines damit verbundenen Bauteils vorgenommen werden. Unter dem Aspekt der Feinheit der Weglängeneinstellung ist die Verzahnungsausführung als bevorzugt angegeben.

Gemäß einem in konstruktiver Hinsicht bevorzugten Ausführungsbeispiel könnte das Getriebe ein Planetengetriebe sein, wobei das Adjustierelement ein Planet ist, wobei die Auslöseeinrichtung eine Nockenscheibe ist und wobei der Auslöser als Nocken auf der Nockenscheibe ausgebildet ist. Zur Festlegung einer Endposition reicht ein Nocken aus, der auf einen Endschalter einwirkt. Eine Umdrehung der Nockenscheibe würde die Weglänge festlegen. Nach einer vorteilhaften Ausführung des in Rede stehenden Ausführungsbeispiels könnten auch zwei oder mehrere Positionen der Weglänge - Anfangsposition bzw. erste Endposition, Zwischenposition, Endposition bzw. letzte Endposition - realisiert werden. Hierzu ist könnten mehrere unterschiedlich angeordnete Auslöser / Nocken und unterschiedliche Bedienknöpfe am Endschalter vorgesehen sein. Bewährt hat sich eine korrespondierende Anzahl an Endschaltern, Nockenscheiben und Nocken sowie Planeten. So könnte die erfindungsgemäße Linearbewegungsvorrichtung im Hinblick auf eine definierte Anfangsposition bzw. erste Endposition und eine definierte Endposition zwei Nockenscheiben mit je einem Nocken sowie zwei Planeten aufweisen, wobei die Nocken mit entsprechend zugeordneten Endschaltern in Wirkverbindung stehen. Wenn mehrere Positionen realisiert werden sollen, könnte das Getriebe eine der Anzahl der Nockenscheiben und Endschalter entsprechende Anzahl von Planeten aufweisen. Bei der bewährten Bauform würden pro Position - Anfangsposition bzw. erste Endposition, eine oder mehrere Zwischenpositionen, Endposition bzw. letzte Endposition - jeweils eine Nockenscheibe mit Nocken und ein Planet erforderlich sein. Alternativ zu einer Nockenscheibe mit Nocken könnte als Auslöseeinrichtung auch eine Schaltscheibe zum Einsatz kommen oder Vorkehrungen für magnetisch oder elektrisch arbeitende Endschalterbetätigungen getroffen sein.

Für das mit einem Planeten, Nockenscheiben und Nocken arbeitende Ausführungsbeispiel der erfindungsgemäßen Linearbewegungsvorrichtung ist in vorteilhafter Weise sichergestellt, dass eine gezielte Einstellung der Nockenscheibe und damit des den Endschalter auslösenden Nocken der Nockenscheibe auf eine einfache Art und Weise ermöglicht ist. Durch die Verdrehbarkeit des Planeten und dessen Festlegbarkeit relativ zum Trägerbauteil und durch das Kämmen der Außenverzahnung des Planeten mit der Innenverzahnung der Nockenscheibe wird eine Verstellung der Nockenscheibe relativ zum Trägerbauteil und damit eine Verstellung der Nocke der Nockenscheibe relativ zum Endschalter bewirkt.

Durch die Möglichkeit, viele verschiedene Positionsänderungen mit der erfindungsgemäßen Linearbewegungsvorrichtung herzustellen, könnte diese auch - bspw. mit einem konstruktiv passend gestalteten Getriebe - Anwendung innerhalb eines Roboters oder eines Automaten finden, wobei es beispielsweise um die Bewegung oder Verschiebung von Gegenständen zu verschiedenen Arbeitsstationen geht.

Bauliche Alternativen zu einer Vielzahl von Nockenscheiben könnten in der Verwendung einer breiten Nockenscheibe als Auslöseeinrichtung liegen, auf denen axial und im Hinblick auf den Winkel zueinander versetzte verschiedene Nocken als Auslöser angeordnet sind, wobei die Nocken dann verschiedene Betätigungseinrichtungen eines Endschalters betätigen könnten oder die verschiedenen Betätigungseinrichtungen verschiedener Endschalter.

Die Wirkverbindung zwischen der Auslöseeinrichtung bzw. den Nockenscheiben und der Endschaltereinrichtung könnte in vorteilhafter Weise dadurch hergestellt werden, dass die Auslöser bzw. Nocken auf Bedienknöpfe verschiedener Endschalter einwirken. Dabei könnten die Auslöser / Nocken zueinander versetzt sein. Der Versatz der Auslöser / Nocken könnte durch die Drehung des Adjustierelements / Planeten einstellbar sein, so dass die Bedienknöpfe der Endschalter einer zeitlich versetzten Betätigung unterliegen. Bei der Realisierung einer Anfangs- und einer Endposition bzw. einer ersten und einer letzten Endposition bedeutet das, dass mit dem ersten Auslöser / Nocken die Anfangsposition bzw. erste Endposition der Weglänge, mit dem durch den Versatz zeitlich später eintreffenden Auslöser / Nocken die letzte Endposition der Weglänge festgelegt wird. Je größer der Versatz der Auslöser, desto länger ist die Weglänge der Spindelmutter und die Weglänge der daran angeordneten Bauteile, Klappen, Behälter etc.. Damit kein gleichzeitiges Betätigen verschiedener Endschalter-Bedienknöpfe stattfindet und eine Blockierung der Endschalter hierdurch ausgeschlossen werden kann, könnte der maximale Versatz zweier Auslöser / Nocken etwas weniger als 360°, ca. 350°, betragen. Alle anderen Versatzwerte der Auslöser aus dem rotatorischen Bereich der erfindungsgemäßen Linearbewegungsvorrichtung hängen davon ab, welche Weglängen durch den Spindelkopf mit Bauteilverbindung aus dem translatorischen Bereich der erfindungsgemäßen Linearbewegungsvorrichtung realisiert werden sollen.

Eine weitere vorteilhafte Ausgestaltung der erfindungsgemäßen Linearbewegungsvorrichtung sieht vor, dass das Getriebe ein Trägerbauteil mit mindestens einer Ausnehmung zur Aufnahme des Adjustierelements / Planeten umfasst, welches mit dem Trägerbauteil drehfest verbunden, insbesondere axial zwischen gegenüberliegenden Schultern des Trägerbauteils, verklemmt ist. Dabei wird gewährleistet, dass die Klemmkraft nur unter Einsatz eines Werkzeuges temporär überwindbar sind und eine Drehung zur Adjustierung herbeiführbar ist, ohne die Wirksamkeit der Verklemmung nach der Adjustierung von außen zu beeinträchtigen. Die eingestellte Position muss bis zur nächsten Adjustierung konstant und unveränderlich bleiben.

Das Trägerbauteil könnte an einer Eingangswelle drehfest angeordnet sein, die von der Motorwelle angetrieben ist. Die drehfeste Verbindung zwischen Eingangswelle und Trägerbauteil könnte in Form einer formschlüssigen Welle-Nabe-Verbindung ausgebildet sein. Hierdurch ist eine besonders gute Drehmomentenübertragung sichergestellt.

Gemäß einer besonders bevorzugten Ausgestaltung des Trägerbauteils könnte dieses einen Anschlag für die Auslöseeinrichtung / die Nockenscheibe, bzw. für die erste Auslöseeinrichtung / die erste Nockenscheibe aufweisen. Der vorbeschriebene Anschlag vereinfacht den Aufbau der erfindungsgemäßen Linearbewegungsvorrichtung in vorteilhafter Weise. Der Anschlag könnte eine L-förmige Ausbildung aufweisen, wobei sich der L-Schenkel koaxial zur Achse sowie beabstandet zum Trägerbauteilbauteil und der L-Fuß radial zur Achse erstreckt. Der L-Fuß bildet hierdurch die Auflagefläche für die Auslöseeinrichtung / die Nockenscheibe und der L-Schenkel bildet eine Führungsfläche. Beide Flächen vereinfachen die Montage enorm.

Gemäß einer speziellen Ausführungsform der das Adjustierelement / den Planeten drehfest lagernden Mittel, könnten diese zumindest ein plattenförmiges Bauteil umfassen, über das das Adjustierelement / der Planet in Richtung der Achse in der Ausnehmung des Trägerbauteils gehalten ist. Dabei könnte das zumindest eine plattenförmige Bauteil über zwei radial gegenüberliegende Befestigungsschrauben am Trägerbauteil befestigt sein. Durch die plattenförmige Ausgestaltung und die Befestigung über zwei radial gegenüberliegenden Befestigungsschrauben ist eine kippsichere Lagerung des Planeten sichergestellt. Des Weiteren könnte das zumindest eine plattenförmige Bauteil eine Öffnung aufweisen, die den Zugang zum Antrieb des Adjustierelements / des Planeten und das Einführen des Werkzeuges, in dessen Antriebsabschnitt hinein, ausbildet.

Weitere vorteilhafte Befestigungsmaßnahmen im Zusammenhang mit dem Trägerbauteil und der Eingangswelle sehen vor, dass die Eingangswelle einen eingangsseitigen Wellenflansch und einen sich daran anschließenden stumpfförmigen Wellenabschnitt aufweist. Der stumpfförmige Wellenabschnitt und das Trägerbauteil könnten über korrespondierend zueinander ausgebildete Anlageflächen verfügen, über die das Trägerbauteil in Bezug zur Eingangswelle axial gehalten ist. Die Verbindung zwischen dem Trägerbauteil und dem stumpfförmigen Wellenabschnitt der Eingangswelle könnte über eine Schraube hergestellt werden, die in den stumpfförmigen Wellenabschnitt der Eingangswelle eingeschraubt werden könnte. Der Vorteil dieser sehr bevorzugten Ausführungsform ist, dass eine einfache, wenig Bauteile benötigende Befestigung des Trägerbauteils an der Eingangswelle ermöglicht ist.

Im Zusammenhang mit der Wirkverbindung zwischen Motorwelle und Eingangswelle sieht eine einfache vorteilhafte Bauform der erfindungsgemäßen Linearbewegungsvorrichtung vor, dass der eingangsseitige Wellenflansch eine Außenverzahnung aufweist, über die die Eingangswelle mit der Motorwelle in Wirkverbindung steht. Gemäß einer speziellen Ausführungsform der Drehmomentübertragung von der Motorwelle auf die Eingangswelle könnte ein Untersetzungsgetriebe verbaut sein, über das die Motorwelle trieblich mit Außenverzahnung des eingangsseitigen Wellenflansches der Eingangswelle verbunden ist.

Die Integration des Endschalters in die erfindungsgemäße Linearbewegungsvorrichtung könnte dadurch erfolgen, dass eine Lagerplatte und eine Fixierplatte vorgesehen sind, zwischen denen der Endschalter axial verklemmt gehalten ist. Die Lagerplatte könnte am stumpfförmigen Wellenabschnitt der Eingangswelle vorgesehen sein und den Endschalter aufnehmen. Die Fixierplatte könnte so axial beabstandet zur Lagerplatte angeordnet sein, dass der Endschalter zwischen Lagerplatte und Fixierplatte axial verklemmt ist. Hierdurch wird eine kippsichere Lagerung des Endschalters gewährleistet. Die Lagerplatte könnte in Bezug zur Eingangswelle axial fest und verdrehbar sein und Fixiermittel aufweisen, über die sie positionsgetreu am Gehäuse befestigbar ist. Der Vorteil dieser Anordnung ist, dass neben einer kompakten Bauform, der Endschalter von außen einfach zugänglich ist, sodass dieser bei Bedarf, z.B. im Falle eines Defekts, aufwandslos gewechselt werden kann. Damit eine positionsgetreue Anordnung der Lagerplatte am Gehäuse gewährleistet ist, können gemäß einer Weiterbildung die Fixiermittel insbesondere in Form zumindest einer die Lagerplatte durchfassenden Durchgangsbohrung sowie einer zugeordneten Befestigungsschraube zum Einschrauben in eine gehäuseseitig vorgesehene Bohrung ausgebildet sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels anhand der Zeichnung zu verweisen. In Verbindung mit der Erläuterung des angeführten Ausführungsbeispiels der Erfindung anhand der Zeichnung werden im Allgemeinen bevorzugte Ausgestaltungen und Weiterbildungen der Lehre erläutert. In der Zeichnung zeigen
- Fig. 1: in einer perspektivischen Darstellung, eine Endschaltereinrichtung für eine erfindungsgemäße Linearbewegungsvorrichtung,
- Fig. 2: in einer Schnittdarstellung den Gegenstand aus Fig. 1
- Fig. 3: in einer Explosionsdarstellung den Gegenstand aus Fig. 1 und
- Fig. 4: in schematischer geschnittener, ausschnittsweiser Darstellung, das die Nockenscheiben und die Planeten tragende Trägerbauteil aus den Fig. 2 und 3.

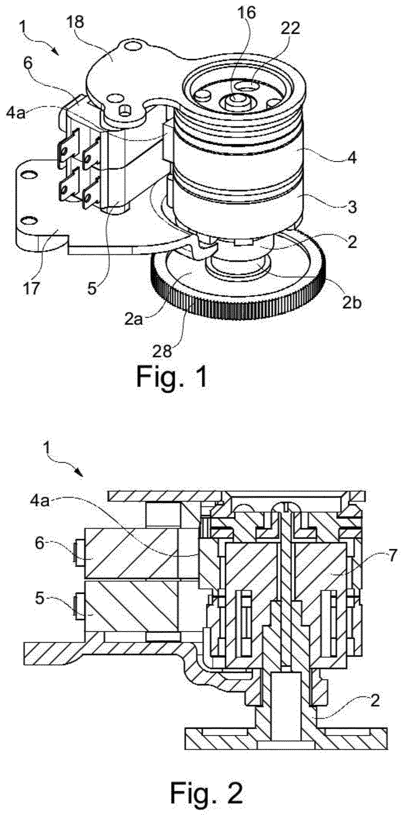

Die Fig.1 bis 3 zeigen eine erfindungsgemäße Endschaltereinrichtung 1 für eine Linearbewegungsvorrichtung. Auf eine Darstellung der gesamten Linearbewegungsvorrichtung wurde vorliegend aus Gründen der Übersichtlichkeit verzichtet. Spindeln und Spindelmuttern sowie deren Antrieb sind dem Fachmann geläufig. Die Erfindung setzt sich mit dem Ein- und Ausschalten der translatorischen Bewegung zur Erzeugung einer definierten Weglänge zwischen einen ersten und einem letzten Endpunkt bzw. einem Anfang und einem Ende unter Ausnutzung eines Getriebes im rotatorischen Bereich der Linearbewegungsvorrichtung auseinander.

Wie die Fig. 1 bis Fig. 3 zeigen, umfasst die Endschaltereinrichtung 1 eine Eingangswelle 2, die über ein nicht näher bezeichnetes Getriebe zwei Auslöseeinrichtungen 3, 4 in Form von Nockenscheiben 3, 4 antreibt. Die Endschaltereinrichtung 1 bildet ein Getriebe aus, das Adjustierelemente 8, 9 in Form zweier Planeten 8, 9, die beiden Nockenscheiben 3, 4 mit den Nocken 3a, 4a umfasst und über zwei Endschalter 5, 6 verfügt.

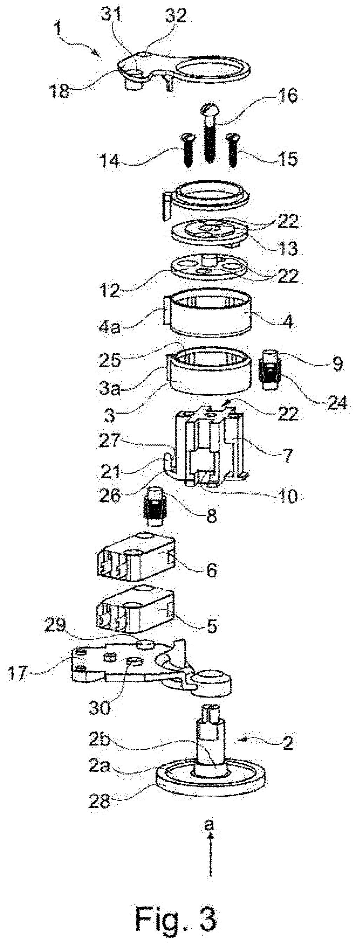

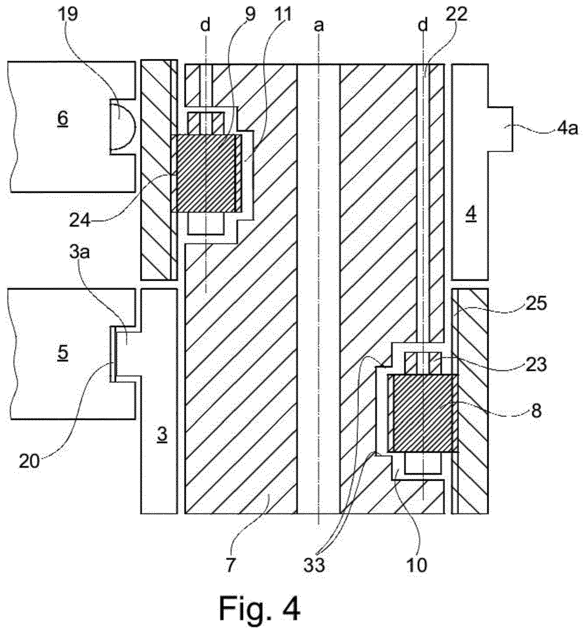

Durch die Nocken 3a, 4a sind die beiden Endschalter 5, 6 über Bedienknöpfe 19, 20 ein- oder ausschaltbar. Der Bedienknopf 20 ist in Fig. 4 in seiner Einschaltposition gezeigt, und durch den Nocken 3a ausgelöst. Die Planeten 8, 9 sind von außen derart in Bezug auf die Nockenscheiben 3, 4 einstellbar, dass die beiden Nocken 3a, 3b die Weglänge der Spindelmutter bzw. daran befestigter Bauteile aus dem translatorischen Bereich der Linearbewegungsvorrichtung mit Spindel und Spindelmutter vorbestimmen. In den Fig. 1, 3, 4 sind Zugangsöffnungen 22 gezeigt, über die der Planet 8, 9 mittels eines hier nicht dargestellten Werkzeuges in Form eines Inbusschlüssels eingestellt werden kann. Die Fig. 3 zeigt die Zugangsöffnung 22bezüglich der plattenförmigen Bauteile 12, 13, und bezüglich eines Trägerbauteils 7, das in Ausnehmungen 10, 11 die Planeten 8, 9 aufnimmt. Die Zugangsöffnungen 22 sind diametral gegenüberliegend angeordnet. Die plattenförmigen Bauteile 12, 13 weisen weitere Durchtrittsöffnungen für Befestigungsschrauben 14, 15 und eine zentrale Schraube 16 auf.

In Fig. 4 ist die Drehachse d der Planeten 8, 9 gezeigt, sowie Antriebsabschnitte 23 an den Planeten 8, 9, in denen ein Antrieb in Form eines Innensechskant ausgebildet ist. Der zur Drehachse d koaxiale Antrieb wird manuell über den nicht gezeigten Inbusschlüssel ausgeführt. Die Planeten 8, 9 werden von einem Trägerbauteil 7 gehalten. Das Trägerbauteil 7 weist Schultern 33 auf gegen die sich der Planet 8, 9 koaxial zur Achse d mit dem Träger einer in Fig. 3 gezeigten Außenverzahnung 24 abstützt. Die Außenverzahnung 24 der Planeten 8, 9 ist in kämmendem Eingriff mit einer Innenverzahnung 25 der Nockenscheiben 3, 4. Beim Einsatz des Werkzeugs durch die Zugangsöffnung 22 hindurch in den Antriebsabschnitt 23 der Planeten 8, 9 wird eine Drehung der ansonsten drehfesten Planeten 8, 9 und gleichzeitig - über die Außenverzahnung 24 / Innenverzahnung 25 - die Feineinstellung der Nockenscheiben 3, 4 nebst Nocken 3a, 4a relativ zum Trägerbauteil 7 durchgeführt. Der dadurch einstellbare Versatz der Nocken 3a, 4a bestimmt schließlich die vom Anwender gewünschte Weglänge der an der erfindungsgemäßen Linearbewegungsvorrichtung angeordneten Bauteile, Klappen, Kippbehälter.

Über die plattenförmigen Bauteile 12, 13 ist das Trägerbauteil 7 im Betriebszustand koaxial zur Achse a fixiert. Die Planeten 8, 9 sind form- und kraftschlüssig zwischen den Schultern 33 des Trägerbauteils 7, in den Ausnehmungen 10, 11 drehfest gehalten, wobei die Drehfestigkeit der Planeten 8, 9 durch den Einsatz des Inbusschlüssels im Antriebsabschnitt 23 temporär überwunden werden kann. Die Befestigung der plattenförmigen Bauteile 12, 13 am Trägerbauteil 7 erfolgt über die Befestigungsschrauben 14, 15, die in Fig. 3 dargestellt sind.

Das Trägerbauteil 7 weist einen L-förmigen Anschlag 21 mit einer Auflagefläche 26 und einer Führungsfläche 27 für die Nockenscheibe 3 auf.

Wie insbesondere aus Fig. 1 bis 3 ersichtlich, weist die Eingangswelle 2 einen eingangsseitigen Wellenflansch 2a sowie einen sich daran anschließenden, sich in axialer Richtung a erstreckenden, stumpfförmigen Wellenabschnitt 2b auf. Der Wellenflansch 2a weist eine Außenverzahnung 28 auf, über die die Eingangswelle 2 mit der Motorwelle der Linearbewegungsvorrichtung zur Antriebszwecken in Wirkverbindung steht. Der stumpfförmige Wellenabschnitt 2b dient zur drehfesten Lagerung des Trägers 7. Hierzu weisen der stumpfförmige Wellenabschnitt 2b und das Trägerteil 7 korrespondierend zueinander ausgebildete Anlageflächen auf, über die das Trägerbauteil 7 in axialer Richtung a am stumpfförmigen Wellenabschnitt 2b und damit in Bezug zur Eingangswelle 2 gehalten ist. Die Befestigung erfolgt über eine zentrisch angeordnete, in den stumpfförmigen Wellenabschnitt 2b einschraubbare Schraube 16. Die zur Drehmomentübertragung notwendige Welle-Nabe-Verbindung zwischen dem stumpfförmigen Wellenabschnitt 2b der Eingangswelle 2 und dem Trägerbauteil 7 ist vorliegend über eine formschlüssige nicht näher bezeichnete Welle-Nabe-Verbindung ausgebildet.

Wie den Fig. 1 bis 3 weiter zu entnehmen ist, sind die Endschalter 5, 6 vorliegend Bestandteil der Endschaltereinrichtung 1 und damit von außen gut zugänglich. Hierzu ist eine Lagerplatte 17 und eine dazu axialer Richtung a betrachtet beabstandet angeordnete Fixierplatte 18 vorgesehen, zwischen denen die Endschalter 5, 6 verklemmt angeordnet sind. Während die Lagerplatte 17 axial fest und verdrehbar am stumpfförmigen Wellenabschnitt 2b angeordnet ist, ist die Fixierplatte 18 axial fest und verdrehbar mit dem Trägerbauteil 7 verbunden. Zur positionsgetreuen Festlegung der Lagerplatte 17 und damit der Endschalter 5, 6 am Gehäuse der Linearbewegungsvorrichtung, weist die Lagerplatte 17 zwei Durchgangsbohrungen 29, 30 auf, durch die hier nicht dargestellte Verbindungsmittel bis zu zur Fixierplatte 18 und den dortigen Durchgangsbohrungen 31, 32 geführt und schließlich fixiert werden.

Hinsichtlich weiterer, in den Figuren nicht gezeigter Merkmale wird auf den allgemeinen Teil der Beschreibung verwiesen. Abschließend sei darauf hingewiesen, dass die erfindungsgemäße Lehre nicht auf das voranstehend erörterte Ausführungsbeispiel eingeschränkt ist.

### Bezugszeichenliste

| | | | |
|---|---|---|---|
| 1 | Endschaltereinrichtung | 19 | Bedienknopf |
| 2 | Eingangswelle | 20 | Bedienknopf |
| 2a | Wellenflansch | 21 | Anschlag an Trägerbauteil |
| 2b | Stumpförmiger Wellenabschnitt | 22 | Zugangsöffnung |
| 3 | Auslöseeinrichtung / Nockenscheibe | 23 | Antriebsabschnitt |
| 3a | Auslöser / Nocken | 24 | Außenverzahnung |
| 4 | Auslöseeinrichtung / Nockenscheibe | 25 | Innenverzahnung |
| 4a | Auslöser / Nocken | 26 | Auflagefläche |
| 5 | Endschalter | 27 | Führungsfläche |
| 6 | Endschalter | 28 | Außenverzahnung |
| 7 | Trägerbauteil | 29 | Durchgangsbohrung |
| 8 | Adjustierelement / Planet | 30 | Durchgangsbohrung |
| 9 | Adjustierelement / Planet | 31 | Durchgangsbohrung |
| 10 | Ausnehmung | 32 | Durchgangsbohrung |
| 11 | Ausnehmung | 33 | Schulter |
| 12 | plattenförmiges Bauteil | | |
| 13 | plattenförmiges Bauteil | | |
| 14 | Befestigungsschraube | | |
| 15 | Befestigungsschraube | | |
| 16 | Schraube | | |
| 17 | Lagerplatte | a | Achse / axial |
| 18 | Fixierplatte | d | Drehachse |

## Patentansprüche

1. Linearbewegungsvorrichtung, mit einem Elektromotor, mit einer vom Elektromotor abgehenden Motorwelle, mit einer drehbar gelagerten und von der Motorwelle angetriebenen Spindel, mit einer auf der Spindel aufgesetzten, drehfest und axial verfahrbar gelagerten Spindelmutter und mit einer Endschaltereinrichtung (1), die bei Auslösung ein Aus-/Einschalten der Energieversorgung des Elektromotors bewirkt, **dadurch gekennzeichnet,**
**dass** die Endschaltereinrichtung (1) ein Getriebe mit mindestens einem Adjustierelement (8, 9) und mit mindestens einer Auslöseeinrichtung (3, 4), umfassend Auslöser (3a, 4a), sowie mindestens einen Endschalter (5, 6) umfasst, dass durch die Auslöser (3a, 4a) der Endschalter (5, 6) ein- oder ausschaltbar ist und dass das Adjustierelement (8, 9) von außen derart in Bezug auf die Auslöseeinrichtung (3, 4) einstellbar ist, dass der Auslöser (3a, 3b) die Weglänge der Spindelmutter vorbestimmt.

2. Linearbewegungsvorrichtung nach Anspruch 1, **dadurch gekennzeichnet, dass** das Adjustierelement (8, 9) einen koaxial zu seiner Drehachse (d) angeordneten Antrieb aufweist, der insbesondere in Form eines Innensechskant ausgebildet ist.

3. Linearbewegungsvorrichtung nach Anspruch 1, **dadurch gekennzeichnet, dass** das Adjustierelement (8, 9) eine Außenverzahnung (24) aufweist und dass die Auslöseeinrichtung (3, 4) eine Innenverzahnung (25) aufweist, wobei Außenverzahnung (24) und Innenverzahnung (25) miteinander korrespondieren.

4. Linearbewegungsvorrichtung nach einem der Ansprüche 1 bis 3, **dadurch gekennzeichnet, dass** das Adjustierelement (8, 9) ein Planet (8, 9) ist, dass die Auslöseeinrichtung (3, 4) eine Nockenscheibe (3, 4) ist, dass der Auslöser (3a, 3b) als Nocken (3a, 3b) auf der Nockenscheibe (3, 4) ausgebildet ist.

5. Linearbewegungsvorrichtung nach Anspruch 4, **dadurch gekennzeichnet, dass** mindestens zwei Nockenscheiben (3, 4) mit je einem Nocken (3a, 3b) vorgesehen sind, die mit entsprechend zugeordneten Endschaltern (5, 6) in Wirkverbindung stehen, wobei das Getriebe eine der Anzahl der Nockenscheiben (3, 4) und Endschalter (5, 6) entsprechende Anzahl von Planeten (8, 9) aufweist.

6. Linearbewegungsvorrichtung nach Anspruch 5, **dadurch gekennzeichnet, dass** die Wirkverbindung zwischen Nockenscheibe (3, 4) und Endschaltereinrichtung (1) durch die Nocken (3a, 4a) und Bedienknöpfe (19, 20) der Endschalter (5, 6) herstellbar ist und dass die Nocken (3a, 4a) versetzt zueinander angeordnet sind.

7. Linearbewegungsvorrichtung nach Anspruch 6, **dadurch gekennzeichnet, dass** der Versatz der Nocken (3a, 4a) durch die Drehung des Planeten (8, 9) einstellbar ist und dass die Bedienknöpfe (19, 20) der Endschalter (5, 6) einer zeitlich versetzten Betätigung unterliegen.

8. Linearbewegungsvorrichtung nach einem der Ansprüche 1 bis 7, **dadurch gekennzeichnet, dass** das Getriebe ein Trägerbauteil (7) mit mindestens einer Ausnehmung (10, 11) zur Aufnahme des Adjustierelements (8, 9) umfasst, welches mit der Ausnehmung (10, 11) drehfest verbindbar insbesondere verklemmbar ist, wobei zur Einstellung und Drehung des Adjustierelements (8, 9) die die Drehfestigkeit erzeugende Kraft temporär überwunden wird.

9. Linearbewegungsvorrichtung nach Anspruch 8, **dadurch gekennzeichnet, dass** das Trägerbauteil (7) einen Anschlag (21) für die Auslöseeinrichtung (3, 4) aufweist.

10. Linearbewegungsvorrichtung nach Anspruch 8 oder 9, **dadurch gekennzeichnet, dass** das Getriebe der Endschaltereinrichtung (1) eine über die Motorwelle angetrieben Eingangswelle (2) aufweist, an der das Trägerbauteil (7) drehfest angeordnet ist.

11. Linearbewegungsvorrichtung nach Anspruch 10, **dadurch gekennzeichnet, dass** insbesondere lösbare Befestigungsmittel in Form von zumindest einem plattenförmigen Bauteil (12, 13) vorgesehen sind, worüber das Trägerbauteil (7) in Richtung der Achse (a), insbesondere über zwei radial gegenüberliegende Befestigungsschrauben (14, 15), fixierbar ist.

12. Linearbewegungsvorrichtung nach Anspruch 11, **dadurch gekennzeichnet, dass** das zumindest eine plattenförmige Bauteil (12, 13) mindestens eine Zugangsöffnung (22) zum Einführen eines Werkzeuges in einen Antriebsbereich (23) des Adjustierelementes (8, 9) aufweist.

13. Linearbewegungsvorrichtung nach einem der Ansprüche 8 bis 12, **dadurch gekennzeichnet, dass** die Eingangswelle (2) einen eingangsseitigen Wellenflansch (2a) und einen sich daran anschließenden stumpfförmigen Wellenabschnitt (2b) aufweist, wobei der stumpfförmige Wellenabschnitt (2b) und das Trägerbauteil (7) korrespondierend zueinander ausgebildete Anlageflächen aufweisen, über die das Trägerbauteil (7) in Bezug zur Eingangswelle (2) axial gehalten ist, und wobei das Trägerbauteil (7) über eine in den stumpfförmigen Wellenabschnitt (2b) einschraubbaren Schraube (16) mit der Eingangswelle (2) verbunden ist.

14. Linearbewegungsvorrichtung nach einem der Ansprüche 10 bis 13, **dadurch gekennzeichnet, dass** die Eingangswelle (2) über eine Außenverzahnung (28) ihres eingangsseitigen Wellenflansches (2a) mit der Motorwelle in Wirkverbindung steht, wobei die Eingangswelle (2) insbesondere über ein Untersetzungsgetriebe mit der Außenverzahnung (28) des eingangsseitigen Wellenflansches (2a) trieblich verbunden ist.

15. Linearbewegungsvorrichtung nach Anspruch 10 bis 14, **dadurch gekennzeichnet, dass** zur Befestigung des Endschalters (5) am stumpfförmigen Wellenabschnitt (2b) der Eingangswelle (2) eine Lagerplatte (17) zur Aufnahme des Endschalters (5, 6) angeordnet ist und das vorzugsweise eine Fixierplatte (18) vorgesehen ist und der Endschalter (5, 6) zwischen Lagerplatte (17) und Fixierplatte (18) axial verklemmt ist.

## Geänderte Patentansprüche

### Geänderte Patentansprüche gemäss Regel 137(2) EPÜ.

1. Linearbewegungsvorrichtung, mit einem Elektromotor, mit einer vom Elektromotor abgehenden Motorwelle, mit einer drehbar gelagerten und von der Motorwelle angetriebenen Spindel, mit einer auf der Spindel aufgesetzten, drehfest und axial verfahrbar gelagerten Spindelmutter und mit einer Endschaltereinrichtung (1), die bei Auslösung ein Aus-/Einschalten der Energieversorgung des Elektromotors bewirkt, wobei mindestens eine Auslöseeinrichtung (3, 4), umfassend Auslöser (3a, 4a), sowie mindestens ein Endschalter (5, 6) vorgesehen sind, wobei durch den Auslöser (3a, 4a) der Endschalter (5, 6) ein- oder ausschaltbar ist,
**dadurch gekennzeichnet,**
**dass** die Endschaltereinrichtung (1) ein Getriebe mit mindestens einem Adjustierelement (8, 9), mit der Auslöseeinrichtung (3, 4) und dem Endschalter (5, 6) umfasst und dass das Adjustierelement (8, 9) von außen derart in Bezug auf die Auslöseeinrichtung (3, 4) einstellbar ist, dass der Auslöser (3a, 3b) die Weglänge der Spindelmutter vorbestimmt.

2. Linearbewegungsvorrichtung nach Anspruch 1, **dadurch gekennzeichnet, dass** das Adjustierelement (8, 9) einen koaxial zu seiner Drehachse (d) angeordneten Antrieb aufweist, der insbesondere in Form eines Innensechskant ausgebildet ist.

3. Linearbewegungsvorrichtung nach Anspruch 1, **dadurch gekennzeichnet, dass** das Adjustierelement (8, 9) eine Außenverzahnung (24) aufweist und dass die Auslöseeinrichtung (3, 4) eine Innenverzahnung (25) aufweist, wobei Außenverzahnung (24) und Innenverzahnung (25) miteinander korrespondieren.

4. Linearbewegungsvorrichtung nach einem der Ansprüche 1 bis 3, **dadurch gekennzeichnet, dass** das Adjustierelement (8, 9) ein Planet (8, 9) ist, dass die Auslöseeinrichtung (3, 4) eine Nockenscheibe (3, 4) ist, dass der Auslöser (3a, 3b) als Nocken (3a, 3b) auf der Nockenscheibe (3, 4) ausgebildet ist.

5. Linearbewegungsvorrichtung nach Anspruch 4, **dadurch gekennzeichnet, dass** mindestens zwei Nockenscheiben (3, 4) mit je einem Nocken (3a, 3b) vorgesehen sind, die mit entsprechend zugeordneten Endschaltern (5, 6) in Wirkverbindung stehen, wobei das Getriebe eine der Anzahl der Nockenscheiben (3, 4) und Endschalter (5, 6) entsprechende Anzahl von Planeten (8, 9) aufweist.

6. Linearbewegungsvorrichtung nach Anspruch 5, **dadurch gekennzeichnet, dass** die Wirkverbindung zwischen Nockenscheibe (3, 4) und Endschaltereinrichtung (1) durch die Nocken (3a, 4a) und Bedienknöpfe (19, 20) der Endschalter (5, 6) herstellbar ist und dass die Nocken (3a, 4a) versetzt zueinander angeordnet sind.

7. Linearbewegungsvorrichtung nach Anspruch 6, **dadurch gekennzeichnet, dass** der Versatz der Nocken (3a, 4a) durch die Drehung des Planeten (8, 9) einstellbar ist und dass die Bedienknöpfe (19, 20) der Endschalter (5, 6) einer zeitlich versetzten Betätigung unterliegen.

8. Linearbewegungsvorrichtung nach einem der Ansprüche 1 bis 7, **dadurch gekennzeichnet, dass** das Getriebe ein Trägerbauteil (7) mit mindestens einer Ausnehmung (10, 11) zur Aufnahme des Adjustierelements (8, 9) umfasst, welches mit der Ausnehmung (10, 11) drehfest verbindbar insbesondere verklemmbar ist, wobei zur Einstellung und Drehung des Adjustierelements (8, 9) die die Drehfestigkeit erzeugende Kraft temporär überwunden wird.

9. Linearbewegungsvorrichtung nach Anspruch 8, **dadurch gekennzeichnet, dass** das Trägerbauteil (7) einen Anschlag (21) für die Auslöseeinrichtung (3, 4) aufweist.

10. Linearbewegungsvorrichtung nach Anspruch 8 oder 9, **dadurch gekennzeichnet, dass** das Getriebe der Endschaltereinrichtung (1) eine über die Motorwelle angetrieben Eingangswelle (2) aufweist, an der das Trägerbauteil (7) drehfest angeordnet ist.

11. Linearbewegungsvorrichtung nach Anspruch 10, **dadurch gekennzeichnet, dass** Befestigungsmittel in Form von zumindest einem plattenförmigen Bauteil (12, 13) vorgesehen sind, worüber das Trägerbauteil (7) in Richtung der Achse (a) fixierbar ist.

12. Linearbewegungsvorrichtung nach Anspruch 11, **dadurch gekennzeichnet, dass** das zumindest ein plattenförmiges Bauteil (12, 13) mindestens eine Zugangsöffnung (22) zum Einführen eines Werkzeuges in einen Antriebsbereich (23) des Adjustierelementes (8, 9) aufweist.

13. Linearbewegungsvorrichtung nach einem der Ansprüche 8 bis 12, **dadurch gekennzeichnet, dass** die Eingangswelle (2) einen eingangsseitigen Wellenflansch (2a) und einen sich daran anschließenden stumpfförmigen Wellenabschnitt (2b) aufweist, wobei der stumpfförmige Wellenabschnitt (2b) und das Trägerbauteil (7) korrespondierend zueinander ausgebildete Anlageflächen aufweisen, über die das Trägerbauteil (7) in Bezug zur Eingangswelle (2) axial gehalten ist, und wobei das Trägerbauteil (7) über eine in den stumpfförmigen Wellenabschnitt (2b) einschraubbaren Schraube (16) mit der Eingangswelle (2) verbunden ist.

14. Linearbewegungsvorrichtung nach einem der Ansprüche 10 bis 13, **dadurch gekennzeichnet, dass** die Eingangswelle (2) über eine Außenverzahnung (28) ihres eingangsseitigen Wellenflansches (2a) mit der Motorwelle in Wirkverbindung steht, wobei die Eingangswelle (2) insbesondere über ein Untersetzungsgetriebe mit der Außenverzahnung (28) des eingangsseitigen Wellenflansches (2a) trieblich verbunden ist.

15. Linearbewegungsvorrichtung nach Anspruch 10 bis 14, **dadurch gekennzeichnet, dass** zur Befestigung des Endschalters (5) am stumpfförmigen Wellenabschnitt (2b) der Eingangswelle (2) eine Lagerplatte (17) zur Aufnahme des Endschalters (5, 6) angeordnet ist und das vorzugsweise eine Fixierplatte (18) vorgesehen ist und der Endschalter (5, 6) zwischen Lagerplatte (17) und Fixierplatte (18) axial verklemmt ist.
